# NEUE EUROPÄISCHE PATENTSCHRIFT

(11) **EP 0 333 088 B2**
(45) Veröffentlichungstag und Bekanntmachung des Hinweises auf die Entscheidung über den Einspruch: **12.10.1994**
(45) Hinweis auf die Patenterteilung: 09.10.1991
(21) Anmeldenummer: 89104378.8
(22) Anmeldetag: 13.03.1989
(51) Int. Cl.: F16K 11/06, F15B 13/02, B60T 17/04

(54) **Schaltventil**
Control valve
Soupape de commande

(30) Priorität: 17.03.1988 DE 3808899
(43) Veröffentlichungstag der Anmeldung: 20.09.1989
(73) Patentinhaber: Armaturenfabrik Hermann Voss GmbH + Co., 51688 Wipperfürth (DE)
(72) Erfinder: Rösch, Volker Dr.,, D-4330 Mülheim ( Ruhr ), (DE); Schultes, Karlheinz Dr.,, D-5000 Köln 1, (DE); Prüfer, Joachim Dipl.-Ing.,, D-5090 Leverkusen, (DE); Geiger, Karl-Otto Dipl.-Ing.,, D-5272 Wipperfürth, (DE)
(74) Vertreter: Patentanwälte Dr. Solf & Zapf

(56) Entgegenhaltungen:
- DE-A- 3 539 316
- DE-C- 247 195
- US-A- 644 356
- US-A- 1 715 765
- US-A- 2 653 003
- US-A- 3 240 832
- US-A- 3 556 151
- Druckschrift der Knorr-Bremse GmbH, D 3251 11 "Drehschieber-Führerbremsventile Nr. 8 und 10"

## Beschreibung

Eine erste Erfindung betrifft gemäß dem Oberbegriff des Patentanspruchs 1 ein Schaltventil zum Steuern insbesondere von pneumatischen Druckmedien, bestehend aus einem Gehäuse mit einem mit einem Systemdruck beaufschlagbaren Eingangskanal und mindestens einem Ausgangskanal sowie mit zwei in einer Gehäusekammer angeordneten, scheibenförmigen, im Betriebszustand unter einer Anpreßkraft dichtend aufeinanderliegenden, vorzugsweise aus Keramikmaterial bestehenden Ventilelementen, wobei das erste Ventilelement ortsfest in der Gehäusekammer gelagert und das zweite Ventilelement derart zwischen mindestens zwei Schaltstellungen verdrehbar in der Gehäusekammer angeordnet ist, daß die Eingangs- und Ausgangskanäle alle oder paarweise miteinander verbindbar bzw. gegeneinander absperrbar sind, wobei jeder Eingangs- bzw. Ausgangskanal des Gehäuses in eine Durchgangsöffnung des ersten, ortsfesten Ventilelementes übergeht und die Verbindung von jeweils mindestens zwei der Kanäle des Gehäuses über das zweite, die Durchgangsöffnungen des ersten Ventilelementes überdeckende und dabei in Abhängigkeit von der Schaltstellung zumindest paarweise verbindende Ventilelement erfolgt. Hierbei ist es wesentlich, daß alle unmittelbar mit den Gehäusekanälen verbundenen Durchgangsöffnungen des ortsfesten Ventilelementes von dem beweglichen Ventilelement überdeckt werden, wodurch das Druckmedium in allen Schaltstellungen des Ventils jeweils nur über Öffnungen der Ventilelemente geführt wird.

Ein derartiges Schaltventil ist aus der DE-A-3539316 bekannt. Die scheibenförmigen Ventilelemente derartiger Schaltventile weisen extrem glatte Oberflächen auf, mit denen sie aufeinanderliegend in innigem Kontakt miteinanderstehen. Hierdurch werden die Ventilelemente aufgrund von auftretenden Adhäsionskräften zusammengehalten, wodurch sich eine Dichtwirkung zwischen den Ventilelementen ergibt, diese aber dennoch gegeneinander verdrehbar und/oder verschiebbar sind. Um ein Auseinanderdrücken der Ventilelemente durch den Systemdruck, der z.B. in pneumatischen Bremssystemen von Kraftfahrzeugen bis zu 20 bar betragen kann, zu verhindern und hierdurch ebenfalls ein Eintreten von Schmutz in den sich zwischen den Ventilelementen bildenden Spalt auszuschließen, ist bei dem bekannten Ventil vorgesehen, daß die Ventilelemente mit einer bestimmten Anpreßkraft gegeneinander gepreßt werden, und zwar wird hier mechanisch eine Vorspannung z.B. durch gummielastische Druck- bzw. Dichtungselemente erzeugt. Dies bedeutet, daß die als "Paket-Einheit" aufeinanderliegenden Ventilelemente mit einer von den Druckelementen bestimmten Kraft gegeneinander gepreßt werden. Es hat sich jedoch gezeigt' daß bei hohen Systemdrücken z.B. von über 6 bar die mechanischen Druck- bzw. Dichtungselemente aufwendig und hiermit die auftretenden Trennkräfte schwer zu beherrschen sind. Weiterhin ist zwar bei dem bekannten Ventil die Höhe der Anpreßkraft bereits einstellbar, allerdings muß diese Einstellung anhand der zu erwartenden Druckwerte manuell vorgenommen werden. Nachteilig ist hierbei, daß Systemdruckänderungen, wie z.B. auftretende Druckspitzen, während des Betriebs des Schaltventils bei der Einstellung nicht berücksichtigt werden können, was folglich zu Dichtungsproblemen durch einen auftretenden Spalt zwischen den Ventilelementen führen kann.

Aus der US-A-1 715 765 ist im Zusammenhang mit einer Druckluft-Bremsvorrichtungein insofern nicht gattungsgemäßes Drehschieberventil bekannt, als dieses ein scheibenförmiges Ventilelement (Drehschieber) aufweist, welches unmittelbar auf der Innenfläche einer Gehäuseplatte ("Ventilsitz" genannt) aufliegt, dabei aber nicht alle Kanäle der - prinzipiell ein "ortsfestes Ventilelement" bildenden - Gehäuseplatte überdeckt. Vielmehr mündet der Druck-Eingangskanal "außerhalb" des Drehschiebers in den Gehäuseinnenraum, der hierdurch ständig unter Druck steht, wodurch der Drehschieber durch Druckbeaufschlagung in Anlage an der Gehäuseplatte gehalten werden soll. Allerdings ist hierdurch der Gehäuseinnenraum in bestimmten Schaltstellungen auch Teil des Strömungsweges, wodurch es zu strömungsbedingten (dynamischen) Druckänderungen kommen kann.

Die DE-A-32 40 832 beschreibt ein ebenfalls nicht gattungsgemäßes Umschaltventil mit zwei scheibenförmigen Keramik-Ventilelementen, und zwar einer ortsfest gelagerten Scheibe und einer drehbaren Scheibe. Über die Erzeugung einer die beiden Scheiben in Anlage haltenden Anpreßkraft ist in dieser Veröffentlichung explizit nichts offenbart. In den Gehäuseinnenraum mündet in einem "oberhalb" der beweglichen Ventilscheibe liegenden Bereich unmittelbar ein Anschlußstutzen, der mit einer Druckleitung verbunden sein soll. Der Innenraum bildet folglich auch hier jeweils einen Teil des Strömungsweges.

Der Erfindung liegt "Zusatz X" die Aufgabe zugrunde, das bekannte Schaltventil der gattungsgemäßen Art so zu verbessern, daß sich die Höhe der die Ventilelemente gegeneinander pressenden Anpreßkraft automatisch an den jeweiligen Systemdruck anpaßt und daß sich zur Erzeugung der Anpreßkraft mechanische Druckelemente i.w. erübrigen können.

Erfindungsgemäß wird dies gemäß dem kennzeichnenden Teil des Patentanspruchs 1 dadurch erreicht, daß das zweite, bewegliche Ventilelement mindestens eine derart Kreisringsegmentförmige Durchgangsöffnung besitzt, die in jeder Schaltstellung zumindest teilweise die mit dem Eingangskanal verbundene Durchgangsöffnung des ersten Ventilelementes sowie in mindestens eine der Schaltstellungen zusätzlich mindestens eine der anderen Durchgangsöffnungen überdeckt, so daß zur Erzeugung der Anpreßkraft das zweite Ventilelement auf seiner dem ersten Ventilelement abgekehrten Oberfläche in jeder Schaltstellung mit dem in dem Eingangskanal herrschenden Systemdruck des Druckmediums beaufschlagt ist. Vorteilhafte Weiterbildungen der Erfindung sind in den vom Anspruch 1 abhängigen Ansprüchen enthalten.

Erfindungsgemäß wird somit eine Durchgangsverbindung geschaffen, die stets, d.h. in jeder Schaltstellung des Ventils, den von dem ortsfesten Ventilelement bzw. von dessen entsprechender Durchgangsöffnung überdeckten Druck-Eingangskanal derart mit dem Raum "oberhalb" des beweglichen Ventilelementes verbindet, daß die Ventilelemente unmittelbar von dem Systemdruck gegeneinander gepreßt werden, da ja eine Wirkung des Druckes auf die aneinanderliegenden Oberflächen der Ventilelemente aufgrund der Dichtwirkung ausgeschlossen ist. Erfindungsgemäß wird somit der Systemdruck einzig und allein zum Zwecke der Erzeugung der Anpreßkraft auf die Seite der dem ersten, ortsfesten Ventilelement abgekehrten Oberfläche des zweiten, beweglichen Ventilelementes geleitet, so daß im Bereich der druckbeaufschlagten Oberfläche des beweglichen Ventilelementes stets im wesentlichen statische Verhältnisse des Druckmediums vorliegen, weil in diesem Bereich praktisch keine Strömung auftritt. Daher sind die Druckverhältnisse hier weitgehend konstant, zumindest treten keine strömungsbedingten Druckabfälle des statischen Anpreßdruckes auf, so daß entsprechendes vorteilhafterweise auch für die resultierende Anpreßkraft gilt. Auf diese Weise wird auch oder vielmehr gerade bei hohen Systemdrücken stets ein "Null-Spalt" zwischen den Ventilelementen gewährleistet, so daß Verschmutzungen der Dichtfläche zwischen den Ventilelementen nahezu völlig ausgeschlossen sind. Von besonderem Vorteil ist, daß sich die Anpreßkraft zwischen den Ventilelementen selbsttätig mit dem Systemdruck einstellt, d.h. je höher der Systemdruck desto höher auch die Anpreßkraft und damit auch die Sicherheit gegen ein druckbedingtes Auseinanderdrücken der Ventilelemente. Hierdurch werden auftretende Druckänderungen während des Betriebs des erfindungsgemäßen Schaltventils vorteilhafterweise selbsttätig ausgeglichen. Auftretende Druckspitzen sind ebenfalls unschädlich, da sich hierdurch auch kurzzeitig die Anpreßkraft erhöht.

Eine weitere Erfindung betrifft gemäß dem Oberbegriff des Patentanspruchs 5 ein Schaltventil zum Steuern insbesondere von pneumatischen Druckmedien, bestehend aus einem Gehäuse mit mindestens einem Druck-Eingangskanal und mindestens einem Ausgangskanal sowie mit mindestens zwei in einer Gehäusekammer angeordneten, scheibenförmigen, im Betriebszustand unter einer Anpreßkraft dichtend aufeinanderliegenden, vorzugsweise aus Keramikmaterial bestehenden Ventilelementen, von denen mindestens eines derart verdrehbar und/oder verschiebbar in der Gehäusekammer angeordnet ist, daß die Eingangs- bzw. Ausgangskanäle alle und/oder paarweise miteinander verbindbar sind, wobei zur Erzeugung der Anpreßkraft zumindest eines der Ventilelemente auf seiner dem anderen Ventilelement abgekehrten Oberfläche von dem Druckmedium beaufschlagt ist.

Ein derartiges Schaltventil ist beispielsweise in der US-A-1 715 765 im Zusammenhang mit einer Druckluft-Bremsvorrichtung beschrieben. Ein scheibenförmiger Drehschieber bildet das bewegliche Ventilelement, welches unmittelbar auf einer Kanäle aufweisen Gehäuseplatte Ventilsitz) aufliegt, die somit praktisch das ortsfeste Ventilelement bildet. Zur Betätigung des Drehschiebers ist mit diesem über eine Welle ein Handhebel verbunden. Damit muß das Ventil manuell in die jeweilige Schaltstellung geschaltet werden.

Diese weiteren Erfindung liegt die Aufgabe zugrunde, bei einem gattungsgemäßen Ventil den Schaltvorgang, insbesondere das Zurückschalten von einer zweiten Schaltstellung in eine erste Schaltstellung, wesentlich zu erleichtern, wobei die jeweilige Schaltstellung auch sehr genau definiert erreicht werden soll, so daß das Ventil auch höchsten Sicherheitsanforderungen genügt.

Erfindungsgemäß wird dies gemäß dem kennzeichnenden Teil des Patentanspruchs 5 durch einen Rückstellungsmechanismus erreicht, der das das zweite Ventilelement ausgehend von einer zweiten Schaltstellung nach geringfügigem manuellen Verdrehen selbsttätig weiter bis in eine erste Schaltstellung zurückverdreht. Vorteilhafte Weiterbildungen der Erfindung sind in den vom Anspruch 5 abhängigen Ansprüchen enthalten.

Durch den erfindungsgemäßen Rückstellungsmechanismus braucht das bewegliche Ventilelement ausgehend von der zweiten Schaltstellung, bei der es sich vorzugsweise um eine sogenannte Belüftungsstellung handelt (Verbraucheranschluß mit Druckanschluß verbunden), manuell lediglich geringfügig; beispielsweise um 30_{°}, verdreht zu werden. Das weitere Verdrehen um beispielsweise weitere 60 bis in die erste Schaltstellung, vorzugsweise in eine sogenannte Entlüftungsstellung (Verbraucheranschluß mit Entlüftung verbunden), erfolgt dann vorteilhafterweise automatisch durch den erfindungsgemäßen Rückstellungsmechanismus. In der bevorzugten Ausführungsform bedeutet dies, daß die Entlüftungsstellung jedenfalls "zwangsweise" erreicht wird, so daß eine hohe Sicherheit gewährleistet ist.

Anhand der Zeichnung werden im folgenden die Erfindungen beispielhaft näher erläutert. Dabei zeigen:
Fig. 1 einen Teil-Längsschnitt durch ein erfindungsgemäßes Schaltventil in einer ersten Schaltstellung,
Fig. 2 einen Querschnitt längs der Linie 11-11 in Fig. 1,
Fig. 3 einen Querschnitt längs der Linie 111-111 in Fig. 1, jedoch in einer zweiten Schaltstellung,
Fig. 4 einen Querschnitt längs der Linie IV-IV in Fig. 1,
Fig. 5 einen Teil-Längsschnitt durch das erfindungsgemäße Schaltventil in einer gegenüber Fig. 1 um 90 versetzten Ebene ebenfalls in der ersten Schaltstellung,
Fig. 6 einen Querschnitt längs der Linie VI-VI in Fig. 5,
Fig. 7 eine teilgeschnittene Ansicht des oberen Bereichs des Schaltventils analog zu Fig. 5, jedoch in der zweiten Schaltstellung,
Fig. 8 eine teilgeschnittene Ansicht in Pfeilrichtung VIII in Fig. 7,
Fig. 9 eine Mantelflächenabwicklung eines Einzelteils IX in Fig. 7 und 8,
Fig. 10 einen Teil-Längsschnitt einer weiteren Ausführungsform eines erfindungsgemäßen Schaltventils,
Fig. 11 einen Querschnitt längs der Linie XI-XI in Fig. 10,
Fig. 12 einen Querschnitt längs der Linie XII-XII in Fig. 10,
Fig. 13 ein Diagramm zur Darstellung des zeitlichen Verlaufs des Ausgangsdruckes Pₐ des Ventils gemäß Fig. 10 bis 12,
Fig. 14 eine Draufsicht eines zu Fig. 10 bis 12 alternativen Ventilelementes,
Fig. 15 Diagramme zur Darstellung der durch das Ventil strömenden Druckmittelmenge Q in Abhängigkeit von der Drehstellung s,
Fig. 16 einen Teil-Längsschnitt einer weiteren Ausführungsform eines erfindungsgemäßen Ventils und
Fig. 17 einen Schnitt längs der Linie XVII-XVII in Fig. 16.

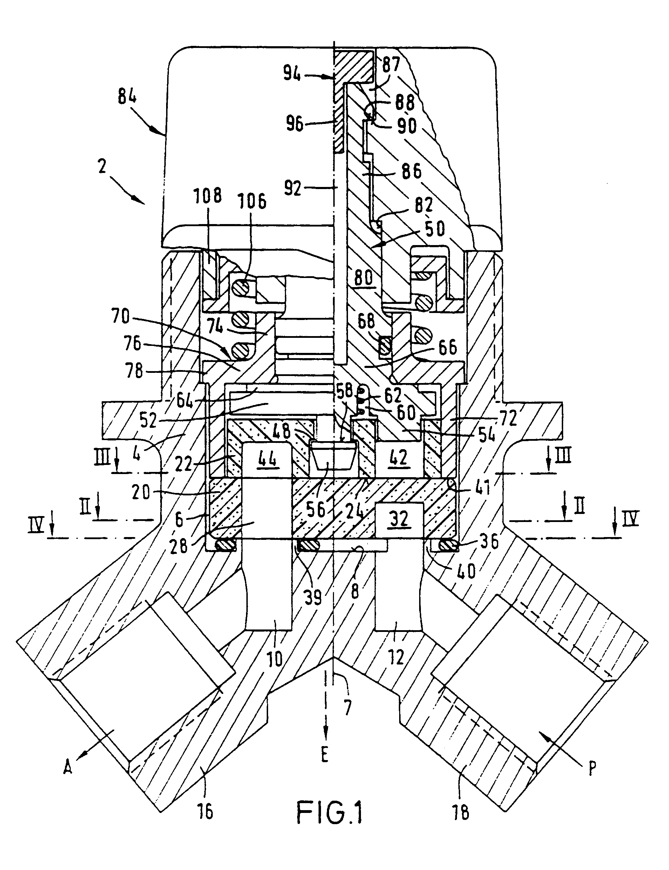

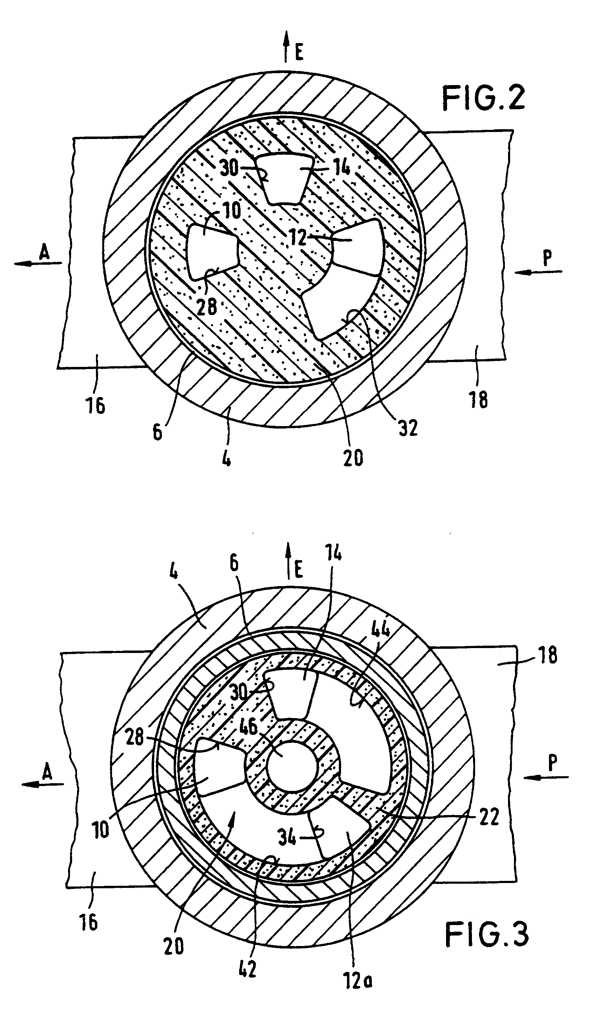

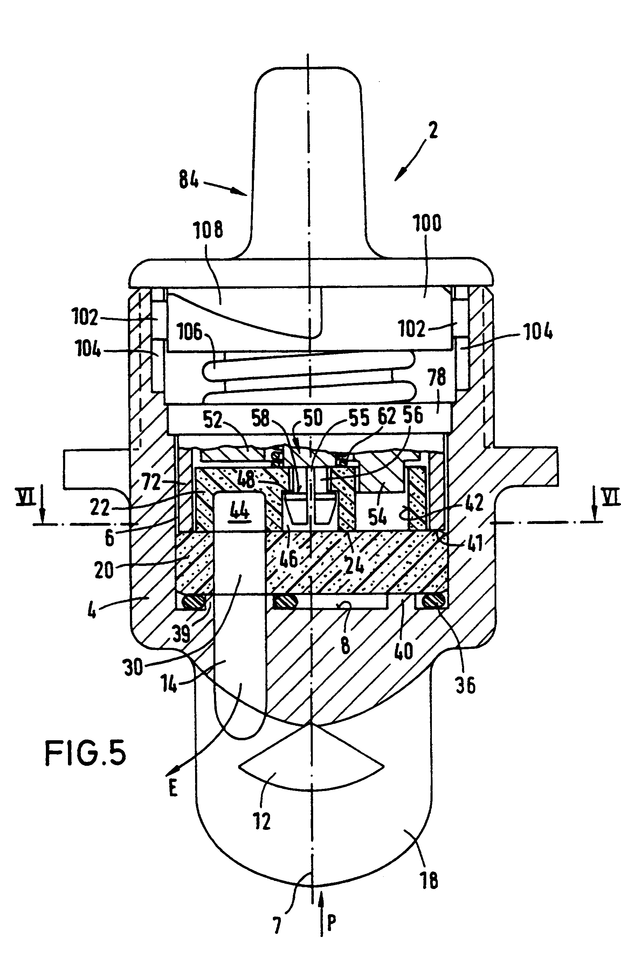

Bei dem in Fig. 1 und 5 dargestellten Schaltventil handelt es sich beispielhaft um ein 3/2-Wegeventil 2 insbesondere für pneumatische Druckmedien, z.B. Druckluft. Das Ventil 2 besitzt ein Gehäuse 4 vorzugsweise aus Kunststoff mit einer i.w. zylindrischen, einseitig offenen Gehäusekammer 6. In ihrem der offenen Seite gegenüberliegenden Bereich ist die Gehäusekammer 6 von einem zur Ventil-Längsachse 7 senkrechten Boden 8 begrenzt, in dessen Bereich drei Kanäle 10 und 12 (Fig. 1) sowie 14 (Fig. 5) in die Gehäusekammer 6 münden. Wie aus dem Schnitt in Fig. 2 zu erkennen ist, besitzen die Kanäle 10, 12 und 14 zumindest in ihrem Mündungsbereich jeweils einen Querschnitt in Form eines Kreisringsegmentes, wobei alle drei Kreisringsegmente auf einem gemeinsamen, gedachten, zu der Längsachse 7 konzentrischen Kreisring liegen. Die Kanäle 10, 12, 14 bzw. deren Mündungen sind jeweils um ca. 90 zueinander versetzt, wobei sich die Kanäle 10 und 12 diametral gegenüberliegen. Die Mündung jedes Kanals 10, 12, 14 überdeckt in Umfangsrichtung einen Winkelbereich von etwa 30 ° . Die Kanäle 10 und 12 verlaufen durch schräg zur Längsachse 7 angeordnete Anschlußstutzen 16 und 18 des Gehäuses 4, wobei an die Anschlußstutzen 16, 18 nicht dargestellte Druckmittelleitungen anschließbar sind, die zu einer Druckmittelquelle P bzw. zu einem Verbraucher A führen. Der dritte Kanal 14 kann im Falle des pneumatischen Ventils zur Entlüftung E einfach nach außen offen sein, während der Kanal 14 bei einem für hydraulische Medien vorgesehenen Ventil über eine Leitung mit einem Druckmitteltank verbunden wäre.

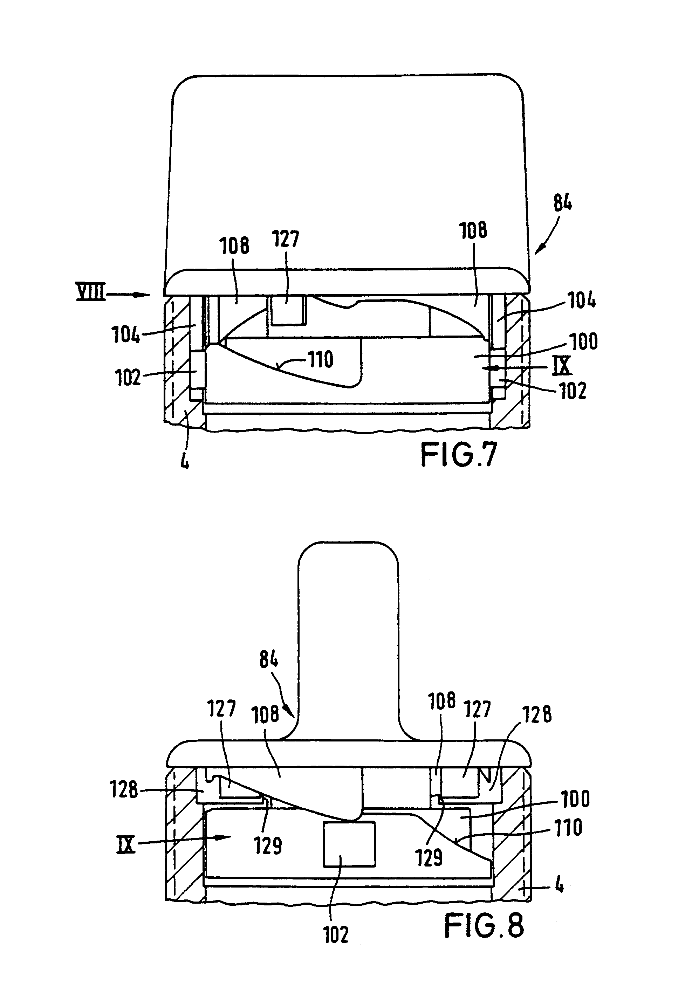

Das erfindungsgemäße Ventil 2 dient nun dazu, in einer ersten Schaltstellung, der sog. Entlüftungsstellung (Fig. 1 und 5), den Verbraucher A bzw. den Kanal 10 mit dem nach außen oder zu einem Druckmitteltank führenden Kanal 14 zu verbinden und den zu der Druckmittelquelle P führenden Kanal 12 zu verschließen. In einer zweiten Schaltstellung, der sog. Belüftungsstellung (Fig. 7 und 8), sollen der Verbraucher A bzw. der Kanal 10 mit der Druckmittelquelle P bzw. mit dem Kanal 12 verbunden und der Entlüftungskanal 14 verschlossen werden.

Zu diesem Zweck sind in der Gehäusekammer 6 zwei scheibenförmige Ventilelemente 20,22 angeordnet, die vorzugsweise aus Keramikmaterial, oder aber aus einem geeigneten Kunststoff bzw. einer Keramik-Kunststoff-Kombination bestehen. Die beiden Ventilelemente 20 und 22 stehen miteinander in direktem stirnseitigen Kontakt, wodurch sich aufgrund ihrer äußerst glatten Oberflächen und einer hierdurch auftretenden Adhäsionswirkung zwischen den Ventilelementen 20, 22 eine Dichtfläche 24 ergibt, ohne daß zusätzliche Dichtungen erforderlich wären.

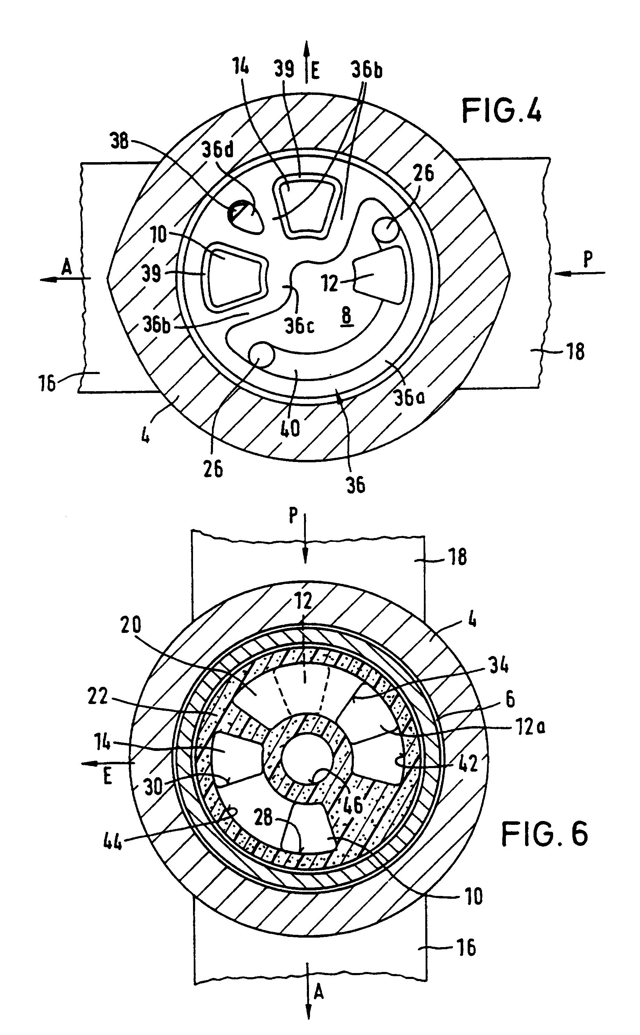

Das dem Boden 8 der Gehäusekammer 6 nächstliegende Ventilelement 20 dient als Verteilerscheibe und ist verdrehsicher in dem Gehäuse 4 gelagert, wozu auf dem Boden 8 vorzugsweise zwei zapfenartige Vorsprünge 26 (siehe Fig. 4) angeordnet sind, die formschlüssig in entsprechende Aufnahmevertiefungen (in der Zeichnung nicht zu erkennen) auf der dem Boden 8 zugekehrten Seite des Ventilelementes 20 eingreifen. Wie aus

Fig. 1 und 2 deutlich wird, besitzt das Ventilelement 20 eine mit dem Verbraucher-Kanal 10 fluchtende Durchgangsöffnung 28 und eine mitdem Entlüftungs-Kanal 14 fluchtende Durchgangsöffnung 30. Diese Durchgangsöffnungen 28 und 30 besitzen jeweils eine zu den Kanälen 10, 14 i.w. kongruente Form, d.h. sie sind ebenfalls kreisringsegmentförmig ausgebildet, wobei sie in Umfangsrichtung ebenfalls einen Winkelbereich von jeweils etwa 30 überdecken. Im Bereich des Druck-Kanals 12 besitzt das Ventilelement 20 auf seiner dem Boden 8 der Gehäusekammer 6 zugekehrten Seite eine kreisringsegmentförmige Vertiefung 32 mit zwei zur Längsachse 7 parallelen Wandungen und einem zu diesen senkrechten Boden (Fig. 1), wobei sich die Vertiefung 32 ausgehend von ihrem den Druck-Kanal 12 überdeckenden Endbereich in Umfangsrichtung von dem Entlüftungskanal 14 weg und auf den Verbraucher-Kanal 10 zu erstreckt (siehe Fig. 2), und zwar überdeckt die Vertiefung 32 einen Winkelbereich von etwa 90°. Wie aus den Schnittansichten nach Fig. 3 und 6 zu erkennen ist, besitzt das Ventilelement 20 in dem in Umfangsrichtung der den Verbraucherkanal 10 überdeckenden Durchgangsöffnung 28 zugekehrten Endbereich der Vertiefung 32 eine Durchgangsöffnung 34, deren Form den Durchgangsöffnungen 28 und 30 entspricht Aufgrund dieser beschriebenen Ausgestaltung ist die Mündung des Druck-Kanals 12 praktisch über das Ventilelement 20, d.h. über die Vertiefung 32 und die Durchgangsöffnung 34, in umfänglicher Richtung auf den Verbraucher- Kanal 10 zu sowie von dem Entlüftungs-Kanal 10 weg versetzt, und zwar um einen Winkel von etwa 600, was insbesondere in Fig. 6 zu erkennen ist, da hier die Mündung des Kanals 12 gestrichelt eingezeichnet ist. Die Durchgangsöffnung 34 des Ventilelementes 20 stellt somit die eigentliche Mündung des Kanals 12 auf der dem anderen Ventil 22 zugekehrten Seite des Ventilelementes 20 dar, was durch die Bezugsziffer 12a angedeutet werden soll.

Wie insbesondere in Fig. 1, 4 und 6 zu erkennen ist, ist zwischen dem Boden 8 der Gehäusekammer 6 und dem Ventilelement 20 eine Profildichtung 36 angeordnet, die gemäß Fig. 4 zur gegenseitigen Abdichtung der Kanäle 10, 12 und 14 deren Mündungen jeweils umschließt. Die Profildichtung 36 besteht aus einem äußeren Ring 36a, der alle Kanäle 10, 12, 14 gemeinsam umschließt. Ausgehend von dem Ring 36a erstrecken sich jeweils beidseitig neben dem Verbraucher-Kanal 10 und dem Entlüftungs-Kanal 14 Dichtungsabschnitte 36b etwa radial nach innen und sind über einen Verbindungsabschnitt 36c miteinander verbunden. Zwischen den Kanälen 10 und 14 besitzt die Profildichtung 36 eine Öffnung 36d, in die ein auf dem Boden 8 der Gehäusekammer 6 angeordneter Positionierungsansatz 38 eingreift, wodurch die Profildichtung 36 verdrehfest in dem Gehäuse 4 gehalten ist. Zum Positionieren des den Kanälen 10 und 14 etwa diametral gegenüberliegenden, flexiblen Bereichs des Ringes 36a dient eine Erhebung 40 des Bodens 8, die sich im dargestellten Beispiel auf einem Kreisbogen zwischen den das Ventilelement 20 verdrehfest haltenden Vorsprüngen 26 erstreckt. Zur zusätzlichen Positionierung der Profildichtung 36 können die Kanäle 10 und 14 von Stegen 39 umgeben sein, die sich axial von dem Boden 8 erstrecken und ihrerseits von der Profildichtung 36 umschlossen sind.

Das zweite Ventilelement 22 dient als Steuerscheibe und ist hierzu relativ zu dem ersten, feststehenden Ventilelement 20 verdrehbar in dem Gehäuse 4 gelagert. Das zweite Ventilelement 22 besitzt einen geringeren Durchmesser als das erste Ventilelement 20, so daß letzteres radial nach außen mit einer ringförmigen Überstandsfläche 41 das zweite Ventilelement 22 überragt (siehe Fig. 1 und 5). Wie am besten in Fig. 3 und 6 zu erkennen ist, besitzt das zweite Ventilelement 22 erfindungsgemäß eine kreisringsegmentförmige Durchgangsöffnung 42, die sich in Umfangsrichtung über einen Winkelbereich von ca. 160 erstreckt. Ferner weist das Ventilelement 22 auf seiner dem anderen Ventilelement 20 zugekehrten Seite eine kreisringsegmentförmige Vertiefung 44 mit zur Längsachse 7 parallelen Wandungen und einem hierzu senkrechten Boden auf. Die Vertiefung 44 erstreckt sich in Umfangsrichtung über einen Winkelbereich von ca. 1200. Die Durchgangsöffnung 42 ist in Umfangsrichtung gesehen einseitig um etwa 20 und anderseitig um etwa 60 _{°} von der Vertiefung 44 beabstandet. Die Durchgangsöffnung 42 und die Vertiefung 44 liegen ebenfalls wie die Mündungen der Kanäle 10,12,14 bzw. die Durchgangsöffnungen 28,30,34 des ersten Ventilelementes 20 auf dem gleichen gedachten, gemeinsamen, zur Längsachse 7 konzentrischen Kreisring, so daß sie die Kanäle, bzw. die Durchgangsöffnungen 28,30 und 34 des Ventilelementes 20 jeweils überdecken können. Schließlich besitzt das Ventilelement 22 eine zentrische, im Querschnitt kreisförmige Durchgangsöffnung 46, die einseitig durch das erste Ventilelement 20 verschlossen ist, und die sich in einer dem ersten Ventilelement 20 abgekehrten Richtung über eine Ringstufe 48 im Durchmesser verringert (Fig. 1 und 5).

In der in Fig. 6 dargestellten ersten Schaltstellung, d.h. in der sog. Entlüftungsstellung, befindet sich das zweite Ventilelement 22 in einer Drehstellung, in der es mit der Vertiefung 44 die Durchgangsöffnungen 28 und 30 des ersten Ventilelementes 20 überdeckt und hierdurch den Verbraucher-Kanal 10 mit dem Entlüftungs-Kanal 14 verbindet, d.h. den Verbraucher A entlüftet. Die Durchgangsöffnung 42 des zweiten Ventilelementes 22 überdeckt dabei einen Bereich des ersten Ventilelementes 20, in dem nur die eigentliche Mündung 12a des Druck-Kanals 12, d.h. die Durchgangsöffnung 34 des ersten Ventilelementes 20, angeordnet ist, so daß folglich der Druck-Kanal 12 durch das Ventil 2 verschlossen ist.

In der in Fig. 3 dargestellten zweiten Schaltstellung, der sog. Belüftungsstellung, befindet sich dagegen das zweite Ventilelement 22 in einer gegenüber Fig. 6 um 90 verdrehten Drehstellung, in der es mit der Durchgangsöffnung 42 die eigentliche Mündung 12a des Druck-Kanals 12, d.h. die Durchgangsöffnung 34 des ersten Ventilelementes 20, sowie den Verbraucher-Kanal 10 bzw. die Durchgangsöffnung 28 des ersten Ventielementes 20 überdeckt und hierdurch den Verbraucher A mit dem Druck P verbindet (belüftet). Die Vertiefung 44 überdeckt nur die Durchgangsöffnung 30 des ersten Ventilelementes 20 bzw. den Entlüftungs-Kanal 14, der hierdurch verschlossen ist.

In beiden Fällen wird durch die erfindungsgemäße Ausgestaltung, und zwar insbesondere dadurch, daß die Durchgangsöffnung 42 des zweiten Ventilelementes 22 stets die eigentliche Mündung 12a des Druck-Kanals 12 überdeckt, erreicht, daß der Druck P in allen Ventilstellungen durch die Durchgangsöffnung 42 hindurch auf die dem ersten Ventilelement 20 abgekehrte Oberseite des zweiten Ventilelementes 22 wirken kann, wodurch dieses vorteilhafterweise gegen das erste Ventilelement 20 gepreßt wird, da ja eine Wirkung des Druckes auf die dem Ventilelement 20 zugekehrte Seite des Ventilelementes 22 aufgrund der Dichtwirkung zwischen den Ventilelementen 20,22 (Dichtfläche 24) ausgeschlossen ist. Auf diese Weise wird auch oder vielmehr gerade bei hohen Systemdrücken stets ein "Null-Spalt" zwischen den Ventilelementen 20 und 22 gewährleistet, so daß Verschmutzungen der Dichtfläche 24 nahezu völlig ausgeschlossen sind. Dabei ist von entscheidendem Vorteil, daß sich die Anpreßkraft des zweiten Ventilelementes gegen das erste Ventilelement 20 selbsttätig mit dem Systemdruck einregelt, d.h. je höher der Systemdruck desto höher auch die Anpreßkraft und damit auch die Sicherheit gegen ein druckbedingtes Auseinanderdrücken der Ventilelemente 20,22.

Zum Verdrehen des zweiten Ventilelementes 22 gegenüber dem feststehenden Ventilelement 20 ist in dem Gehäuse ein Mitnehmerelement 50 angeordnet. Wie am besten in Fig. 1 zu erkennen ist, besteht dieses Mitnehmerelement 50 aus einem parallel zu dem zweiten Ventilelement 22 auf dessen dem ersten Ventilelement 20 abgekehrten Seite angeordneten, kreisförmigen Scheibenteil 52, das auf seiner dem zweiten Ventilelement 22 zugekehrten Fläche mindestens einen in beiden Umfangsrichtungen formschlüssig in die Durchgangsöffnung 42 des zweiten Ventilelementes 22 eingreifenden, kreisringsegmentförmigen Mitnehmeransatz 54 aufweist. Vorzugsweise sind zwei kreisringsegmentförmige Mitnehmeransätze 54 vorgesehen, die jeweils in den Endbereichen der Durchgangsöffnung 42 an dem zweiten Ventilelement 22 zur Drehmitnahme anliegen, und zwischen denen in Umfangsrichtung ein Spalt verbleibt, über den in der oben beschriebenen Weise der Druck P durch die Durchgangsöffnung 42 hindurch die Oberseite des Ventilelementes 22 beaufschlagt. Der Scheibenteil 52 besitzt ferner einen zentrischen, einen axialen Schlitz 55 (s. Fig. 5) aufweisenden Rastansatz 56, der sich in die zentrische Durchgangsöffnung 46 des Ventilelementes 22 erstreckt und mit einer Rastkante 58 die Ringstufe 48 in der Durchgangsöffnung 46 rastend hintergreift, wobei der Rastansatz 56 aufgrund des axialen Schlitzes 55 in zwei radial federelastische Rastarme unterteilt ist. Der Rastansatz 56 ermöglicht eine einfache Montage des zweiten Ventilelementes 22, indem dieses über den Rastansatz 56 an dem Mitnehmerelement 50 vormontiert und zusammen mit diesem in die Gehäusekammer 6 eingesetzt wird. Der Rastansatz 56 ist konzentrisch von einer sich axial in den Scheibenteil 52 erstreckenden Ringnut 60 umgeben, in der eine als Spiralfeder ausgebildete Druckfeder 62 unter Vorspannung angeordnet ist, die sich einseitig im Grund der Ringnut 60 und anderseitig auf dem zweiten Ventilelement 22 abstützt. Hierdurch wird eine das zweite Ventilelement 22 gegen das erste Ventilelement 20 pressende Vorspannung erzeugt, die erfindungsgemäß zumindest so groß ist, daß sie dazu ausreicht, im drucklosen Zustand des Ventils 2 zwischen den beiden Ventilelementen 20 und 22 den erwähnten "Nullspalt" zu gewährieisten. Nach Druckbeaufschlagung wird dann durch die Erfindung die Wirkung der Feder 62 durch den Systemdruck unterstützt bzw. verbessert.

Wie weiter aus Fig. 1 deutlich wird, schließt sich an den Scheibenteil 52 auf seiner dem Ventilelement 22 abgekehrten Seite in axialer Richtung ein weiterer, im Durchmesser reduzierter, flacher Scheibenteil 64 und an diesen ein zentrischer, zylindrischer Dichtungsansatz 66 mit einem gegenüber dem Scheibenteil 64 weiter reduzierten Durchmesser an. Der Dichtungsansatz 66 trägt in einer Ringnut einen Dichtring 68.

Die Gehäusekammer 6 ist durch ein Verschlußteil 70 druckdicht verschlossen. Dieses Verschlußteil 70 besteht aus zwei Hohlzylinderabschnitten 72 und 74 mit unterschiedlichen Durchmessern, die in radialer Richtung über einen Scheibenring 76 ineinander übergehen. Der dem Boden 8 der Gehäusekammer 6 zugekehrte, untere Hohlzylinderabschnitt 72 besitzt einen größeren Durchmesser als der andere, obere Hohlzylinderabschnitt 74, umschließt konzentrisch die beiden Scheibenteile 52 und 64 des Mitnehmerelementes 50 sowie das zweite Ventilelement 22 und sitzt mit einer stirnseitigen Ringfläche auf der oben bereits erwähnten Überstandsfläche 41 des ersten Ventilelementes 20 auf. Der obere Hohlzylinderabschnitt 74 umschließt konzentrisch den Dichtungsansatz 66 des Mitnehmerelementes 50, wobei der Dichtring 68 dichtend an der Innenumfangsfläche des oberen Hohlzylinderabschnittes 74 anliegt. Auf der Höhe des die beiden Hohlzylinderabschnitte 72 und 74 verbindenden Scheibenringes 76 weist das Verschlußteil 70 einen radial nach außen weisenden, umlaufenden Ringsteg 78 auf, der auf einer Ringstufe der Gehäusekammer 6 in axialer Richtung aufsitzend mit dem Gehäuse 4 stoffschlüssig verbunden, insbesondere ultraschallverschweißt ist. Aufdiese Weise ist die Gehäusekammer 6 durch das Verschlußelement 70 druckdicht verschlossen und zwar aufgrund der umfänglichen Verschweißung mit dem Gehäuse 4 im Bereich des Ringstegs 78 sowie aufgrund des den Spalt zwischen dem Mitnehmerelement 50 bzw. dem Dichtungsansatz 66 und dem oberen Hohlzylinderabschnitt. 74 abdichtenden Dichtringes 68. Der untere Hohlzylinderabschnitt. 72 des Verschlußteils 70 drückt nach dem Herstellen der Verbindung mit dem Gehäuse 4 im Bereich des Ringstegs 78 das erste Ventilelement 20 über die Überstandsfläche 41 axial in Richtung des Bodens 8 der Gehäusekammer 6 bzw. gegen die Profildichtung 36, die hierdurch zum gegenseitigen Abdichten der Kanäle 10, 12 und 14 vorgespannt wird. Durch die unlösbare Verbindung zwischen dem Verschlußteil 70 und dem Gehäuse 4 sitzt auch das drehbewegliche Mitnehmerelement 50 in axialer Richtung fest in dem Gehäuse 4, da es mit dem Scheibenteil 64 an der inneren Ringfläche des Scheibenrings 76 des Verschlußteils 70 zur Anlage kommt.

An den Dichtungsansatz 66 des Mitnehmerelementes 50 schließt sich in axialer Richtung weiterhin ein Mitnehmerabschnitt 80 an, der einen von der Kreisform abweichenden, vorzugsweise quadratischen Querschnitt besitzt und formschlüssig in eine Mitnehmeraufnahme 82 eines sich axial an das Gehäuse 4 anschließenden Drehknopfes 84 eingreift. Zur Halterung des Drehknopfes 84 weist das aufgrund des Verschlußteils 70 in dem Gehäuse 4 gehaltene Mitnehmerelement 50 im axialen Anschluß an den Mitnehmerabschnitt 80 einen stiftförmigen Rastansatz 86 auf, der sich in eine axiale Öffnung 87 des Drehknopfes 84 erstreckt und mit einer Rastkante 88 eine Ringstufe 90 der Öffnung 87 hintergreift. Zu diesem Zweck weist der Rastansatz 86 einen axialen Schlitz 92 auf, wodurch er in zwei radial federelastische Rastanne unterteilt ist, die endseitig angefast sind. Es ist weiterhin vorteilhaft, wenn in die nach außen offene Öffnung 87 des Drehknopfes 84 von oben ein Sicherungsstift 94 axial eingesteckt ist, der mit einem Stiftabschnitt 96 zwischen die Rastarme des Rastansatzes 86 eingreift und diese somit in ihrer radial gespreizten Raststellung hält, wodurch der Drehknopf 84 gegen ein ungewolltes Lösen gesichert ist. Ein Lösen des Drehknopfes 84 ist dennoch möglich, indem zuvor der Sicherungsstift 94 entfernt wird.

In einer weiteren Ausgestaltung der Erfindung besitzt das Ventil 2 einen Rückstellmechanismus zum automatischen Rückstellen des zweiten Ventilelementes 22 von der zweiten Schaltstellung (Bolüftungsstellung Fig. 3,7,8) zurück in die erste Schaltstellung (Entlüftungsstellung, Fig. 1,5,6). Dieser Rückstellmechanismus soll im folgenden insbesondere unter Bezug auf die Fig. 1,5,7,8 und 9 erläutert werden.

Zwischen dem Drehknopf 84 und dem Verschlußteil 70 ist in dem Gehäuse 4 ein Rückstellring 100 (entspricht dem Einzelteil IX) angeordnet, der einerseits in axialer Richtung verschieblich und andererseits in Umfangsrichtung verdrehfest in dem Gehäuse 4 gelagert ist, Hierzu weist der Rückstellring 100 beispielsweise zwei einander diametral gegenüberliegende, radiale Ansätze 102 auf, die jeweils in eine Axialnut 104 im Inneren des Gehäuses 4 eingreifen und in diesen in Richtung der Ventil-Längsachse 7 verschieblich geführt sind. Zwischen dem Rückstellring 100 und dem Verschlußteil 70 ist eine vorgespannte, als Spiralfeder ausgebildete Druckfeder 106 (siehe Fig. 1 und 5) angeordnet, die den Rückstellring 100 axial in Richtung des Drehknopfes 84 drängt. Der Drehknopf 84 weist vorzugsweise zwei einander diametral gegenüberliegende, sich axial in Richtung des Rückstellringes 100 erstreckende Nocken 108 auf, die auf einer axial gegenüberliegenden, umfänglichen Nockenfläche 110 des Rückstellringes 100 aufliegen.

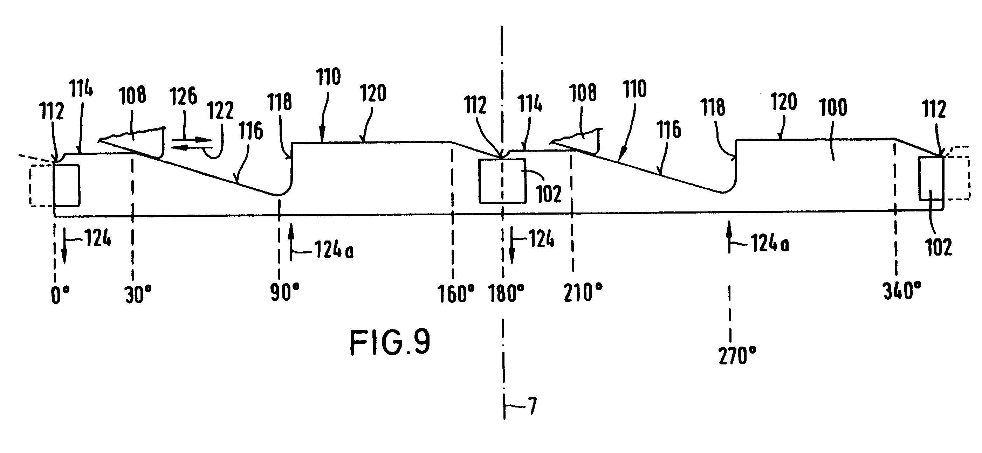

Eine Abwicklung des Rückstellringes 100 bzw. der Nockenfläche 110 ist in Fig. 9 dargestellt. Hieraus ist zu erkennen, daß die Nockenfläche 110 zwei gleiche Abschnitte aufweist, die jeweils ausgehend von einer bei 0_{°} bzw. 180 angeordneten Rastvertiefung 112 einen über einen Winkelbereich von etwa 30 senkrecht zur Ventil-Längsachse 7 verlaufenden, gegenüber der Rastvertiefung 112 in Richtung des Drehknopfes 84 geringfügig versetzten Bereich 114 sowie eine sich an diesen Bereich 114 anschließende, über einen Winkelbereich von etwa 60 in einer dem Drehknopf 84 abgekehrten Richtung geneigt verlaufende Schrägfläche 116 aufweist, wobei die Schrägfläche 116 sich weiter in axialer Richtung von dem Drehknopf 84 weg erstreckt als die Rastvertiefung 112 und bei einer sich im wesentlichen parallel zur Längsachse 7 erstreckenden Anschlagkante 118 endet. An die Anschlagkante 118 schließt sich ein über einen Winkelbereich von ca. 70 senkrecht zur Längsachse 7 verlaufender Bereich 120 an, der bei 160 bzw. 340 wieder in die Rastvertiefung 112 übergeht. Der Bereich 120 liegt dem Drehknopf 84 etwas näher als der Bereich 114.

Der erfindungsgemäße Rückstellmechanismus arbeitet nun folgendermaßen. In der ersten Schaltstellung, der Entlüftungsstellung, befinden sich die Nocken 108 des Drehknopfes 84 im Anschlag an don Anschlagkanten 118 an der tiefsten Stelle der Schrägflächen 116. Durch eine Verdrehung des Drehknopfes 84 in Richtung der zweiten Schaltstellung, der Belüftungsstellung, bewegen sich die Nocken 108 in Pfeilrichtung 122 über die Nockenfläche 110, wodurch aufgrund der Schrägflächen 116 der Rückstellring 100 axial in Richtung der Pfeile 124 gegen die Kraft der Feder 106 verschoben wird, wodurch sich deren Vorspannung erhöht. Bei weiterer Drehung des Drehknopfes 84 bewegen sich die Nocken 108 in Pfeilrichtung 122 zunächst über die Nockenflächenbereiche 114, bis sie in der zweiten Schaltstellung in die Rastvertiefungen 112 einrasten. Der Rückstellring 100 bewegt sich hier wieder in axialer Richtung etwas zurück entgegen der Pfeilrichtung 124. Durch das Eingreifen der Nocken 108 in die Rastvertiefungen 112 wird somit die Belüftungsstellung definiert. Zum Rückstellen des Ventils 2 in die Entlüftungsstellung braucht nun der Drehknopf 84 lediglich um einen Winkel von etwa 30 gedreht zu werden, bis die Nocken 108 in Pfeilrichtung 126 aus den Rastvertiefungen 112 über die Nockenflächenbereiche 114 in die Bereiche der Schrägflächen 116 gelangen. Danach werden aufgrund der erhöhten Vorspannung der Feder 106 der Rückstellring 100 automatisch axial in Richtung des Drehknopfes 84, d.h. in Pfeilrichtung 124a zurückverschoben sowie aufgrund der Schrägflächen 116 die Nocken 108 weiter in Pfeilrichtung 126 bewegt, d.h. der Drehknopf 84 weitergedreht, bis wieder die Ausgangsstellung erreicht ist, in der die Nocken 108 an den Anschlagkanten 118 anliegen. Die Entlüftungsstellung wird hierdurch in jedem Fall erreicht, wenn der Drehknopfzumindest um 30 verdreht wird. Die restliche, zum Erreichen der Entlüftungsstellung erforderliche Verdrehung von ca. 60 erfolgt aufgrund des erfindungsgemäßen Rückstellmechanismus vorteilhafterweise automatisch, so daß das Ventil der vorliegenden Erfindung auch höchsten Sicherungsanforderungen genügt

In einer vorteilhaften, in Fig. 7 und 8 veranschaulichten Weiterbildung der Erfindung besitzt der Drehknopf 84 außer den bereits beschriebenen Nocken 108 zusätzlich mindestens einen, vorzugsweise jedoch zwei einander diametral gegenüberliegende Anschlagnocken 127, die sich in axialer Richtung in jeweils eine umfängliche Gehäuseausnehmung 128 erstrecken. Jede Gehäuseausnehmung 128 erstreckt sich in Umfangsrichtung über weniger als 1800, so daß sie von zwei Anschlagkanten 129 begrenzt ist. Die Ausbildung und Anordnung der Anschlagnocken 127 und der Anschlagkanten 129 ist dabei erfindungsgemäß derart, daß die Anschlaggnocken 127 in jeder der beiden Schaltstellungen des erfindungsgemäßen Ventils jeweils an einer der beiden Anschlagkanten 129 anliegen, wodurch vorteilhafterweise die Rastwirkung zwischen den Nocken 108 und der Nokkenfläche 110 verstärkt wird, d.h. die beiden Schaltstellungen des Schaltventils sind noch klarer definiert.

Die Erfindung läßt sich außer bei dem bisher beschriebenen 3/2-Wegeventil 2 auch bei beliebigen anderen Ventilen verwirklichen, beispielsweise bei 2/2-Wegeventilen. Wesentlich ist nur, daß der Systemdruck die dem ersten Ventilelement (Verteilerscheibe) abgekehrte Oberfläche des zweiten Ventilelementes (Steuerscheibe) beaufschlagt, so daß das zweite Ventilelement gegen das fest im Gehäuse sitzende erste Ventilelement gepreßt wird.

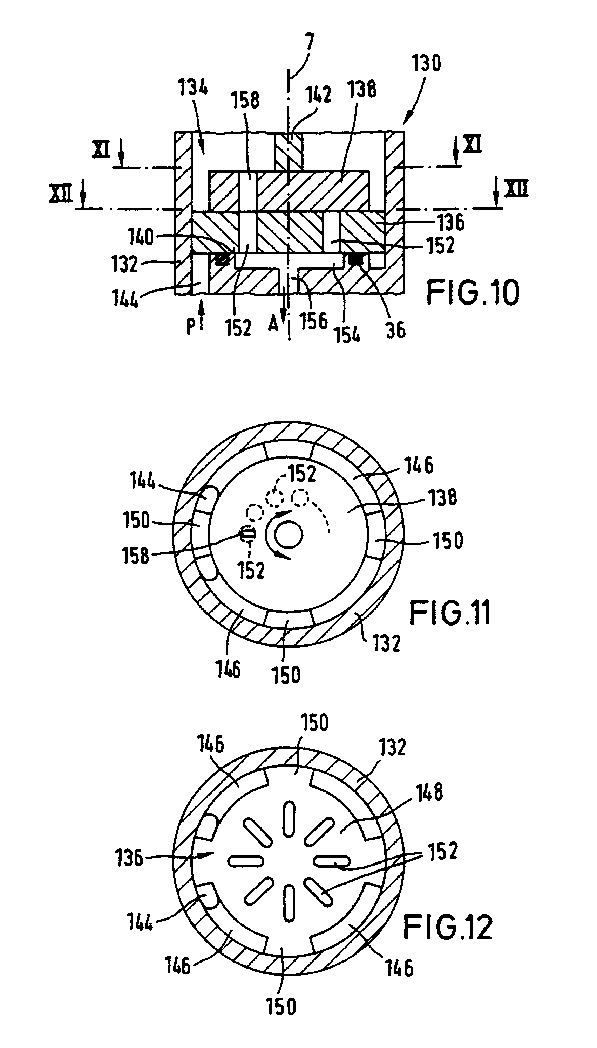

So ist in den Fig. 10 bis 12 ein Ventil 130 dargestellt, welches in einem Ventilgehäuse 132 bzw. in dessen Gehäusekammer 134 wiederum zwei scheibenförmige Ventilelemente, und zwar ein erstes Ventilelement 136 und ein zweites Ventilelement 138 aufweist. Die Gehäusekammer 134 ist auch hier vorzugsweise zylindrisch mit einem zur Ventil-Längsachse 7 senkrechten Boden 140 ausgebildet. Das erste Ventilelement 136 ist erfindungsgemäß unabhängig von dem zweiten Ventilelement 138 verdrehfest sowie in axialer Richtung in dem Gehäuse 132 gehalten, und das zweite Ventilelement 138 ist relativ zu dem ersten Ventilelement 136 mittels eines nur angedeuteten Mitnehmerelementes 142 drehbeweglich gelagert. Die Gehäusekammer 134 ist in einer zu den Fig. 1 bis 9 analogen Weise durch ein in Fig. 10 nicht dargestelltes Verschlußteil verschlossen.

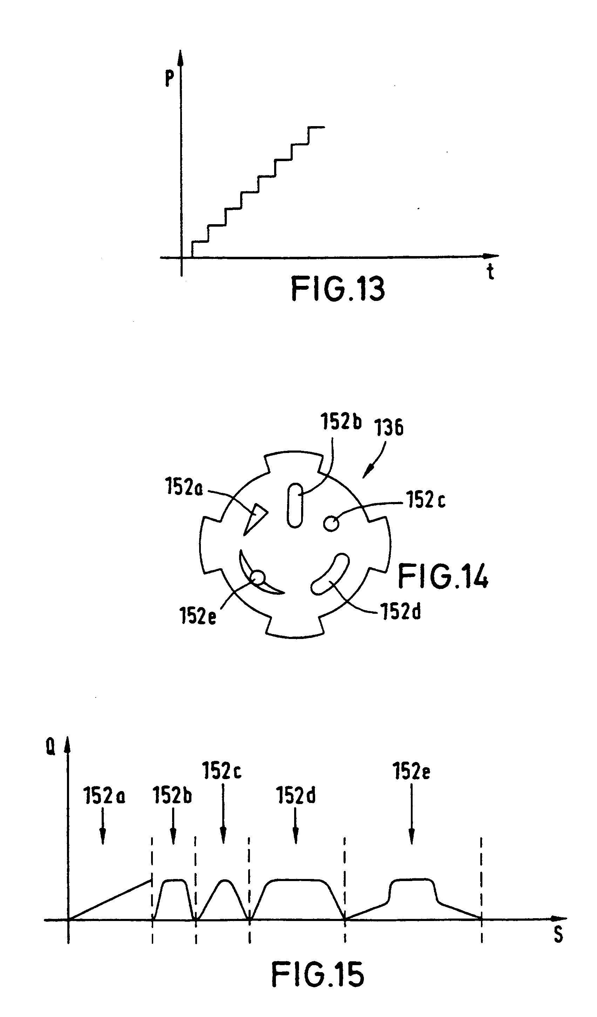

In diesem Ausführungsbeispiel mündet ein mit einer Druckmittelquelle P verbundener Kanal 144 im radial äußeren Bereich des Bodens 140 in die Gehäusekammer 134. Das erste Ventilelement 136 besitzt auf seinem Außenumfang im Bereich der Mündungen dieses Druck-Kanals 144 zumindest eine axiale Schlitzöffnung 146, wodurch ein Druckmedium über den Kanal 144 und die Schlitzöffnung 146 axial an den beiden Ventilelementen 136,138 vorbei in den oberhalb des zweiten Ventilelementes 138, welches wiederum einen geringeren Durchmesser als das erste Ventilelement 136 aufweist, liegenden Bereich gelangt und hier wiederum die dem ersten Ventilelement 136 abgekehrte Oberfläche des zweiten Ventilelementes beaufschlagt. Das zweite Ventilelement 138 wird hierdurch erfindungsgemäß durch den Systemdruck gegen das erste Ventilelement 136 gepreßt, was stets den angestrebten "Null-Spalt" zwischen den Ventilelementen 136 und 138 gewährleistet. Vorzugsweise besteht das erste Ventilelement 136 aus einem Kreisscheibenteil 148 mit radialen Ansätzen 150, zwischen denen jeweils die Schlitzöffnungen 146 gebildet sind. Das erste Ventilelement 136 besitzt in dem Kreisscheibenteil 148 mehrere auf einem zur Längsachse 7 konzentrischen Kreis liegende und vorzugsweise gleichmäßig über den Umfang verteilt angeordnete Durchgangsöffnungen 152. Das Gehäuse 132 weist in dem Boden 140 eine die Durchgangsöffnungen 152 gemeinsam überdekkende Vertiefung 154 auf, in dessen Bereich ein gemeinsamer, zu einem Verbraucher A führender Kanal 156 mündet. Das zweite Ventilelement 138 besitzt dagegen nur eine Durchgangsöffnung 158, die so angeordnet ist, daß sie bei Drehung des zweiten Ventilelementes 138 mit jeder der Durchgangsöffnungen 152 des ersten Ventilelementes 136 zumindest bereichsweise in Deckung gebracht werden kann. Die Durchgangsöffnungen 152 und 158 können mit unterschiedlichen Querschnittsformen ausgebildet sein. So sind die Durchgangsöffnungen 152 des ersten Ventilelementes 136 gemäß Fig. 11 kreisförmig und gemäß Fig. 12 in Form von radial angeordneten Langlöchem ausgebildet. Die Durchgangsöffnung 158 des zweiten Ventilelementes 138 ist z.B. ebenfalls als Langloch ausgebildet. Diese Ausführungsform des erfindungsgemäßen Ventils 130 eignet sich insbesondere zur Anwendung in einer sog. Kaskadenschaltung, wobei das zweite Ventilelement 138 mittels eines motorischen Antriebes, insbesondere mittels eines Schrittmotors, angetrieben wird. Auf diese Weise erhält der in einem Verbraucher A vorhandene Ausgangsdruck Pₐ den in Fig. 13 dargestellten, zeitilchen Verlauf, d.h. der Druck Pₐ steigt treppenförmig an.

Dabei läßt sich erfindungsgemäß der Verlauf des treppenförmigen Anstieges zusätzlich durch entsprechende Formen der Durchgangsöffnungen 152 und/oder 158 steuern. In Fig. 14 sind verschiedene Alternativen für Durchgangsöffnungen 152 angedeutet. Die Durchgangsöffnung 152a besitzt einen dreieckigen Querschnitt, die Durchgangsöffnung 152b einen radial angeordneten Langlochquerschnitt, die Durchgangsöffnung 152c einen kreisförmigen Querschnitt, die Durchgangsöffnung 152d einen in Umfangsrichtung gekrümmt verlaufenden Langlochquerschnitt und die Durchgangsöffnung 152e einen kreisförmigen Querschnitt mit zwei sich in Umfangsrichtung erstreckenden, spitz zulaufenden Abschnitten. In dem Diagramm nach Fig. 15 ist der jeweilige Vertauf der Durchflußmenge Q eines Druckmediums über den Dreh-Weg s des Ventilelementes 138 dargestellt.

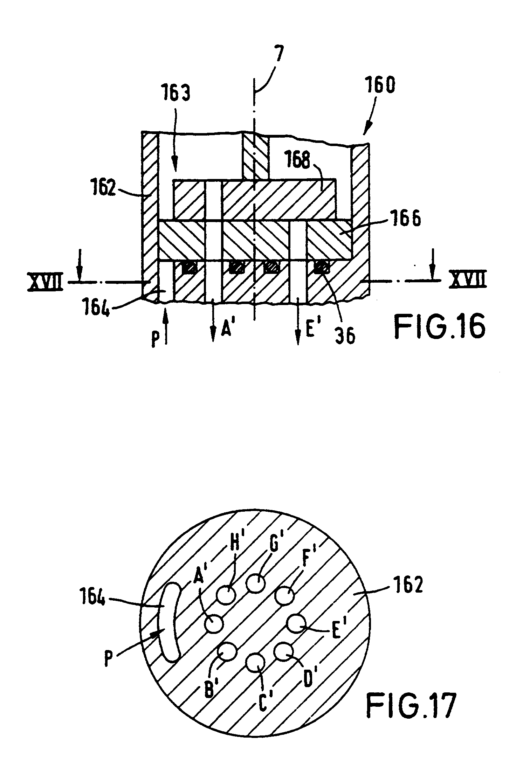

Das in Fig. 16 und 17 veranschaulichte Ventil 160 besitzt in seinem Gehäuse 162 einen in die Gehäusekammer 163 mündenden Druck-Kanal 164 analog zur Ausführung nach Fig. 10, jedoch eine Vielzahl von Ausgangskanälen, und zwar beispielsweise acht Ausgangskanäle A', B', C', D', E', F', G' und H' (siehe den Schnitt in Fig. 17). Das erste Ventilelement 166 ist im Bereich seines Außenumfanges analog zur Ausführung nach Fig. 10 ausgebildet und besitzt Durchgangsöffnungen, die mit den Mündungen der Ausgangskanäle A' bis H' fluchten. Die Ausbildung des zweiten Ventilelementes 168 entspricht derjenigen nach Fig. 10. Bei dieser Ausführung können die Ausgangskanäle A' bis H' selektiv mit dem Druck-Kanal 164 verbunden werden, so daß wahlweise einer von mehreren Verbrauchern aktiviert werden kann. Auch bei dieser Ausführung wird erfindungsgemäß das zweite Ventilelement 168 durch den Systemdruck gegen das erste Ventilelement 166 gepreßt.

## Patentansprüche

1. Schaltventil zum Steuern insbesondere von pneumatischen Druckmedien, bestehend aus einem Gehäuse (4) mit einem mit einem Systemdruck (P) beaufschlagbaren Eingangskanal (12) und mindestens einem Ausgangskanal (10,14) sowie mit zwei in einer Gehäusekammer (6) angeordneten, scheibenförmigen, im Betriebszustand unter einer Anpreßkraft dichtend aufeinanderliegenden, vorzugsweise aus Keramikmaterial bestehenden Ventilelementen (20, 22), wobei das erste Ventilelement (20) ortsfest in der Gehäusekammer (6) gelagert und das zweite Ventilelement (22) derart zwischen mindestens zwei Schaltstellungen verdrehbar in der Gehäusekammer (6) angeordnet ist, daß die Eingangs- und Ausgangskanäle (10,12,14) alle oder paarweise miteinander verbindbar bzw. gegeneinander absperrbar sind, wobei jeder Eingangs- bzw. Ausgangskanal (10,12,14) des Gehäuses (4) in eine Durchgangsöffnung (28,30,34) des ersten, ortsfesten Ventilelementes (20) übergeht und die Verbindung von jeweils mindestens zwei der Kanäle des Gehäuses (4) über das zweite, die Durchgangsöffnungen (28,30,34) des ersten Ventilelementes (20) überdeckende und dabei in Abhängigkeit von der Schaltstellung zumindest paarweise verbindende Ventilelement (22) erfolgt,
dadurch gekennzeichnet, daß das zweite, bewegliche Ventilelement (22) mindestens eine derart Kreisringsegmentförmige Durchgangsöffnung (42) besitzt, daß diese in jeder Schaltstellung zumindest teilweise die mit dem Eingangskanal (12) verbundene Durchgangsöffnung (34) des ersten Ventilelementes (20) sowie in mindestens einer der Schaltstellungen zusätzlich mindestens eine der anderen Durchgangsöffnungen (28) überdeckt, so daß zur Erzeugung der Anpreßkraft das zweite Ventilelement (22) auf seiner dem ersten Ventilelement (20) abgekehrten Oberfläche in jeder Schaltstellung mit dem in dem Eingangskanal (12) herrschenden Systemdruck des Druckmediums beaufschlagt ist.

2. Schaltventil nach Anspruch 1,
dadurch gekennzeichnet, daß sich an die dem ersten Ventilelement (20) abgekehrte, druckbeaufschlagte Oberfläche des zweiten Ventilelements (22) ein Bereich der Gehäusekammer (6) anschließt, der über die Durchgangsöffnungen (34,42) der Ventilelemente (20,22) mit dem Druck-Eingangskanal (12) verbunden ist.

3. Schaltventil nach Anspruch 1 oder 2,
dadurch gekennzeichnet, daß die Gehäusekammer (6) zylindrisch mit einem senkrecht zur Gehäuse-Längsachse (7) angeordneten Boden (8) ausgebildet ist, wobei die Kanäle (10,12,14) im Bereich des Bodens (8) in die Gehäusekammer (6) münden und dann jeweils in die Durchgangsöffnungen (28,30,34) des ersten, dem Boden (8) zugekehrten, ortsfest gelagerten Ventilelementes (20) übergehen, und wobei zwischen dem ersten Ventilelement (20) und dem Gehäuse-Boden (8) eine die Kanäle gegeneinander abdichtende Profildichtung (36) angeordnet ist.

4. Schaltventil nach einem oder mehreren der Ansprüche 1 bis 3,
gekennzeichnet durch einen Rückstellungsmechanismus, der das zweite Ventilelement (22) ausgehend von einer zweiten Schaltstellung nach geringfügigem manuellen Verdrehen selbsttätig weiter bis in eine erste Schaltstellung zurückverdreht.

5. Schaltventil zum Steuern insbesondere von pneumatischen Druckmedien, bestehend aus einem Gehäuse (4,132, 162) mit mindestens einem Druck-Eingangskanal (12,144, 164) und mindestens einem Ausgangskanal (10,14,156) sowie mit mindestens zwei in einer Gehäusekammer (6, 134,163) angeordneten, scheibenförmigen, im Betriebszustand unter einer Anpreßkraft dichtend aufeinanderliegenden, vorzugsweise aus Keramikmaterial bestehenden Ventilelementen (20,22; 136,138; 166,168), von denen mindestens eines derart verdrehbar in der Gehäusekammer angeordnet ist, daß die Eingangs- bzw. Ausgangskanäle alle und/oder paarweise miteinander verbindbar sind, wobei zur Erzeugung der Anpreßkraft zumindest eines (22; 138; 168) der Ventilelemente (20,22; 136,138; 166,168) auf seiner dem anderen Ventilelement (20; 136; 166) abgekehrten Oberfläche von dem Druckmedium beaufschlagt ist,
gekennzeichnet durch einen Rückstellungsmechanismus, der das zweite Ventilelement (22) ausgehend von einer zweiten Schaltstellung nach geringfügigem manuellen Verdrehen selbsttätig weiter bis in eine erste Schaltstellung zurückverdreht.

6. Schaltventil nach Anspruch 5,
dadurch gekennzeichnet, daß in dem Gehäuse (4,132,162) zwei Ventilelemente (20,22; 136,138; 166,168) angeordnet sind, wobei das erste Ventilelement (20,136,166) unabhängig von dem zweiten Ventilelement (22,138,168) in der Gehäusekammer (6, 134,163) sowohl in axialer als auch umfänglicher Richtung ortsfest gehaltert und das zweite Ventilelement (22,138,168) verdrehbar gelagert ist.

7. Schaltventil nach Anspruch 5 oder 6,
dadurch gekennzeichnet, daß sich an die dem ersten Ventilelement (20,136,166) abgekehrte, druckbeaufschlagte Oberfläche des zweiten Ventilelementes (22,138,168) ein Bereich der Gehäusekammer (6,134,163) anschließt, der mit dem Druck-Eingangskanal (12,144,164) verbunden ist.

8. Schaltventil nach einem oder mehreren der Ansprüche 5 bis 7,
dadurch gekennzeichnet, daß die Gehäusekammer (6,134,163) zylindrisch mit einem senkrecht zur Gehäuse-Längsachse (7) angeordneten Boden (8,140) ausgebildet ist, wobei die Kanäle (10,12,14; 144,156;164, A'bis H') im Bereich des Bodens (8,140) in die Gehäusekammer (6,134,163) münden und das erste, dem Boden (8,140) zugekehrte, ortsfest gelagerte Ventilelement (20,136,166) mit den Kanälen in Verbindung stehende Durchgangsöffnungen (28,30,34; 146,152) aufweist, und wobei zwischen dem ersten Ventilelement (20,136,166) und dem Gehäuse-Boden (8,140) eine die Kanäle gegeneinander abdichtende Profildichtung (36) angeordnet ist.

9. Schaltventil nach einem oder mehreren der Ansprüche 5 bis 8,
dadurch gekennzeichnet, daß das zweite, drehbar gelagerte Ventilelement (22) mindestens eine axiale Durchgangsöffnung (42) besitzt, die sich in jeder Drehstellung zumindest teilweise mit der mit dem Druck-Kanal (12) verbundenen Durchgangsöffnung (34) des ersten Ventilelementes (20) deckt.

10. Schaltventil nach einem oder mehreren der Ansprüche 1 bis 9,
dadurch gekennzeichnet, daß das erste Ventilelement (20,136,166) mit einem derart größeren Durchmesser als das zweite Ventilelement (22, 138,168) ausgebildet ist, daß es dieses in radialer Richtung mit einer Überstandsfläche (41) überragt, wobei ein hohlzylindrisches Verschlußteil (70) das zweite, drehbeweglich gelagerte Ventilelement (22, 138,168) umschließend auf der Überstandsfläche (41) aufsitzt und das erste Ventilelement (20,136,166) gegen die Profildichtung (36) preßt.

11. Schaltventil nach Anspruch 10,
dadurch gekennzeichnet, daß das Verschlußteil (70) an seinem Außenumfang mit dem Gehäuse (4,132,162) stoffschlüssig verbunden, insbesondere ultraschallverschweißt ist.

12. Schaltventil nach Anspruch 10 oder 11,
dadurch gekennzeichnet, daß sich durch das Verschlußteil (70) ein axiales Mitnehmerelement (50) erstreckt, welches verdrehfest mit dem zweiten Ventilelement (22,138,168) verbunden sowie über einen Dichtring (68) gegen das Verschlußteil (70) abgedichtet ist.

13. Schaltventil nach einem oder mehreren der Ansprüche 10 bis 12,
dadurch gekennzeichnet, daß das erste Ventilelement (136,166) im Bereich der Überstandsfläche (41) mindestens eine axiale Schlitzöffnung (146) besitzt, die den Druck-Eingangskanal (144, 164) zumindest teilweise überdeckt.

14. Schaltventil nach Anspruch 12 oder 13,
dadurch gekennzeichnet, daß das Mitnehmerelement (50) einen axialen, kraft- und/oder formschlüssig in eine zentrische Öffnung (46) des zweiten Ventilelementes (22,138,168) eingreifenden Rastansatz (56) aufweist.

15. Schaltventil nach einem oder mehreren der Ansprüche 9 bis 12 oder 14,
dadurch gekennzeichnet, daß das Mitnehmerelement (50) mindestens einen in beiden Umfangsrichtungen formschlüssig in die Durchgangsöffnung (42) des zweiten Ventilelementes (22) eingreifenden, axialen Mitnehmeransatz (54) aufweist.

16. Schaltventil nach einem oder mehreren der Ansprüche 12 bis 15,
dadurch gekennzeichnet, daß zwischen dem Mitnehmerelement (50) und dem zweiten Ventilelement (22,138,168) eine vorgespannte Druckfeder (62) angeordnet ist.

17. Schaltventil nach einem oder mehreren der Ansprüche 12 bis 16,
dadurch gekennzeichnet, daß sich das Mitnehmerelement (50) in einer den Ventilelementen entgegengesetzten, axialen Richtung an dem Verschlußteil (70) abstützt.

18. Schaltventil nach einem oder mehreren der Ansprüche 12 bis 17,
dadurch gekennzeichnet, daß das Mitnehmerelement (50) mit einem im Querschnitt vorzugsweise quadratischen Mitnehmerabschnitt (80) formschlüssig in eine Mitnehmeraufnahme (82) eines Drehknopfes (84) eingreift.

19. Schaltventil nach Anspruch 18,
dadurch gekennzeichnet, daß das Mitnehmerelement (50) mit einem Rastansatz (86) kraft- und/oder formschlüssig in eine axiale Öffnung (87) des Drehknopfes (84) eingreift.

20. Schaltventil nach Anspruch 19,
dadurch gekennzeichnet, daß der Rastansatz (86) stiftförmig sowie mit einem axialen Schlitz (92) ausgebildet ist, wobei in der axialen Öffnung (87) des Drehknopfes (84) ein Sicherungsstift (94) angeordnet ist, der mit einem Stiftabschnitt (96) in den Schlitz (92) des Rastansatzes (86) eingreift.

21. Schaltventil nach einem oder mehreren der Ansprüche 1 bis 20,
dadurch gekennzeichnet, daß der Rückstellmechanismus einen zwischen dem Drehknopf (84) und dem Verschlußteil (70) in dem Gehäuse (4) angeordneten Rückstellring (100) aufweist, der in axialer Richtung verschieblich sowie in Umfangsrichtung verdrehfest in dem Gehäuse (4) gelagert ist, wobei zwischen dem Rückstellring (100) und dem Verschlußteil (70) eine vorgespannte Druckfeder (106) angeordnet ist, und wobei der Drehknopf (84) sich axial in Richtung des Rückstellringes (100) erstrekkende Nocken (108) aufweist, die auf einer axial gegenüberliegenden, umfänglichen Nokkenfläche (110) des Rückstellringes (100) aufliegen.

22. Schaltventil nach Anspruch 21,
dadurch gekennzeichnet, daß der Drehknopf (84) zwei einander diametral gegenüberliegende Nocken (108) aufweist, und daß die Nokkenfläche (110) des Rückstellringes (100) zwei gleiche Abschnitte aufweist, die jeweils ausgehend von einer bei 0 bzw. 180 angeordneten Rastvertiefung (112) einen über einen Winkelbereich von etwa 30 _{°} senkrecht zur Ventil-Längsachse (7) verlaufenden, gegenüber der Rastvertiefung (112) in Richtung des Drehknopfes (84) geringfügig versetzten Bereich (114) sowie eine sich an diesen Bereich (114) anschließende, über einen Winkelbereich von etwa 60 _{°} in einer dem Drehknopf (84) abgekehrten Richtung geneigt verlaufende Schrägfläche (116) aufweist, wobei die Schrägfläche (116) bei einer sich im wesentlichen parallel zur Längsachse (7) erstreckenden Anschlagkante (118) endet, an die sich ein über einen Winkelbereich von ca. 70 senkrecht zur Längsachse (7) verlaufender Bereich (120) anschließt, der bei 160 _{°} bzw. 340 wieder in die Rastvertiefung (112) übergeht.

23. Schaltventil nach einem oder mehreren der Ansprüche 18 bis 22,
dadurch gekennzeichnet, daß der Drehknopf (84) mindestens einen, vorzugsweise zwei diametral gegenüberliegende Anschlagnocken (127) aufweist, wobei sich jeder Anschlagnokken (127) in axialer Richtung in eine umfängliche Gehäuseausnehmung (128) erstreckt, die in umfänglicher Richtung von zwei Anschlagkanten (129) begrenzt ist, an denen der Anschlagnocken (127) alternativ in der ersten oder der zweiten Schaltstellung anliegt.

## Claims

1. Control valve for controlling, in particular, pneumatic pressure media, consisting of a housing (4) with an inlet channel (12) which can be subjected to a system pressure (P) and at least one outlet channel (10, 14) and with two disc-shaped valve elements (20, 22) preferably consisting of ceramic material, which are arranged in a housing chamber (6) and, in the operating state, lie sealingly one upon the other under a contact pressure force, the first valve element (20) being mounted stationarily in the housing chamber (6) and the second valve element (22) being arranged to be capable of being twisted in the housing chamber (6) between at least two switching positions, in such a manner that the inlet and outlet channels (10, 12, 14) can all, or in pairs, be connected to each other or sealed off from each other, each inlet and outlet channel (10, 12, 14) of the housing (4) making a transition into a passage aperture (28, 30, 34) of the first stationary valve element (20) and the connection between each two or more of the channels of the housing (4) being effected via the second valve element (22) which covers the passage apertures (28, 30, 34) of the first valve element (20) and in so doing, as a function of the switching position, connects them at least in pairs, characterized in that the second, movable valve element (22) possesses at least one passage aperture (42), which is of ring segment shape that the latter, in each switching position, at least partially covers the passage aperture (34) of the first valve element (20) which is connected to the inlet channel (12) and in at least one of the switching positions additionally covers at least one of the other passage apertures (28), so that in order to generate the contact pressure force the second valve element (22) is subjected in every switching position on its surface remote from the first valve element (20) to the system pressure of the pressure medium prevailing in the inlet channel (12).

2. Control valve according to Claim 1, characterized in that the surface of the second valve element (22) which is remote from the first valve element (20) and is subjected to pressure is joined by a region of the housing chamber (6) which is connected via the passage apertures (34, 42) of the valve elements (20, 22) to the pressure inlet channel (12).

3. Control valve according to Claim 1 or 2, characterized in that the housing chamber (6) is cylindrically designed with a base (8) arranged perpendicularly to the longitudinal axis (7) of the housing, the channels (10, 12, 14) opening into the housing chamber (6) of the base (8) and then each making a transition into the passage apertures (20, 30, 34) of the first valve element (20), which faces the base (8) and is stationarily mounted, and a profiled seal (36), sealing the channels relative to each other, being arranged between the first valve element (20) and the housing base (8).

4. Control valve according to one or more of Claims 1 to 3, characterized by a restoring mechanism which, starting from a second switching position and after slight manual twisting, automatically twists the second valve element (22) on into a first switching position.

5. Control valve for controlling, in particular, pneumatic pressure media, consisting of a housing (4, 132, 162) with at least one pressure inlet channel (12, 144, 164) and at least one outlet channel (10, 14, 156) and with at least two disc-shaped valve elements (20, 22; 136, 138; 166, 168) preferably consisting of ceramic material, which are arranged in a housing chamber (6, 134, 163) and, in the operating state, lie sealingly one upon the other under a contact pressure force, of which valve elements at least one is twistably arranged in the housing chamber so that the inlet and outlet channels can all, and/or in pairs, be connected to each other, at least one (22; 138; 168) of the valve elements (20, 22; 135, 136; 166, 168) being subjected to the action of the pressure medium on its surface remote from the other valve element (20; 136; 166) in order to generate the contact pressure force, characterized by a restoring mechanism which, starting from a second switching position and after slight manual twisting, automatically twists the second valve element (22) further into a first switching position.

6. Control valve according to Claim 5, characterized in that two valve elements (20, 22; 136, 138; 166, 168) are arranged in the housing (4, 132, 162), the first valve element (20, 136, 166) being mounted independently of the second valve element (22, 138, 168) in the housing chamber (6, 134, 163) and mounted stationarily both in the axial and in the circumferential direction and the second valve element (22, 138, 168) being twistably mounted.

7. Control valve according to Claim 5 or 6, characterized in that the surface of the second valve element (22, 138, 168) which is remote from the first valve element (20, 136, 166) and is subjected to pressure is adjoined by a region of the housing chamber (6, 134, 163) which is connected to the pressure inlet channel (12, 144, 164).

8. Control valve according to one or more of Claims 5 to 7, characterized in that the housing chamber (6, 134, 163) is cylindrically designed with a base (8, 140) arranged perpendicularly to the longitudinal axis (7) of the housing, the channels (10, 12, 14; 144, 156; 164, A' to H') opening into the housing chamber (6, 134, 163) in the region of the base (8, 140) and the first, stationarily mounted valve element (20, 136, 166), which faces the base (8, 140) having passage apertures (28, 30, 34; 146, 152) connected to the channels, and a profiled seal (36) which seals the channels off from each other being arranged between the first valve element (20, 136, 166) and the housing base (8, 140).

9. Control valve according to one or more of Claims 5 to 8, characterized in that the second, rotatably mounted valve element (22) possesses at least one axial passage aperture (42) which, in every position of rotation, is at least partially aligned with the passage aperture (34) of the first valve element (20) connected to the pressure channel (12).

10. Control valve according to one or more of Claims 1 to 9, characterized in that the first valve element (20, 136, 166) is designed with a diameter which is greater than the second valve element (22, 138, 168) in such a manner that it projects beyond the latter in the radial direction with an overlap surface (41), a hollow cylindrical closure part (70) being enclosingly seated on the second, rotationally movably mounted valve element (22, 138, 168) on the overlap surface (41) and the first valve element (20, 136, 166) pressing against the profiled seal (36).

11. Control valve according to Claim 10, characterized in that the closure part (70), on its outer circumference, is connected in a materially integrated manner, especially ultrasonically welded, to the housing (4, 132, 162).

12. Control valve according to Claim 10 or 11, characterized in that an axial dog element (50) extends through the closure part (70), is connected to the second value element (22, 138, 168) to be secure against twisting, and is sealed off from the closure part (70) via a sealing ring (68).

13. Control valve according to one or more of Claims 10 to 12, characterized in that the first valve element (136, 166) possesses at least one axial slit aperture (146) in the region of the overlap surface (41) which at least partially covers the pressure inlet channel (144, 164).

14. Control valve according to Claim 12 or 13, characterized in that the dog element (50) has an axial locking catch (56) which engages with positive and/or non-positive fitting into a central aperture (46) of the second valve element (22, 138, 168).

15. Control valve according to one or more of Claims 9 to 12 or 14, characterized in that the dog element (50) has at least one axial dog catch (54) engaging in both circumferential directions with positive fitting into the passage aperture (42) of the second valve element (22).

16. Control valve according to one or more of Claims 12 to 15, characterized in that a pre-stressed compression spring (62) is arranged between the dog element (50) and the second valve element (22, 138, 168).

17. Control valve according to one or more of Claims 12 to 16, characterized in that the dog element (50) is supported on the closure part (70) in the arial direction opposite to the valve elements.

18. Control valve according to one or more of Claims 12 to 17, characterized in that the dog element (50) engages with a dog section (80) preferably of square cross-section with positive fitting into a dog receptacle (82) of a twist button (84).

19. Control valve according to Claim 18, characterized in that the dog element (50) engages with a locking catch (86) with positive and/or non-positive fitting, into an axial aperture (87) of the twist button (84).

20. Control valve according to Claim 19, characterized in that the locking catch (86) is of pin- shaped design with an axial slit (92), a securing pin (94) being arranged in the axial aperture (87) of the twist button (84) and engaging with a pin section (96) into the slip (92) of the locking catch (86).

21. Control valve according to one or more of Claims 1 to 20, characterized in that the restoring mechanism has a restoring ring (100) arranged between the twist. button (84) and the closure part (70) in the housing (4), which restoring ring is mounted in the housing (4) to be displaceable in the axial direction and secure against twisting in the circumferential direction, a pre-stressed compression spring (106) heing arranged between the restoring ring (100) and the closure part (70) and the twist button (84) having cams (108) extending axially in the direction of the restoring ring (100) and resting on an axially opposite, circumferential cam surface (110) of the restoring ring (100).

22. Control valve according to Claim 21, characterized in that the twist button (84) has two cans (108) lying diametrically opposite each other, and in that the cam surface (110) of the restoring ring (100) has two identical sections, each of which, starting from a locking recess (112) arranged at 0 and 180 respectively, has a region (114) extending over an angular range of approximately 30 perpendicularly to the longitudinal axis (7) of the valve and slightly offset in the direction of the twist button (84) relative to the locking recess (112) and an oblique surface (116) adjoining this region (114) and extending in an inclined manner over an angular range of approximately 60 in a direction away from the twist button (84), the oblique surface (116) ending in a stop edge (118) extending substantially parallel to the longitudinal axis (7) and adjoined by a region (120) extending over an angular range of approximately 70 _{°} perpendicularly to the longitudinal axis (7) and, at 160 and 340 _{°} respectively, making a transition again into the locking recess (112).

23. Control valve according to one or more of Claims 18 to 22, characterized in that the twist button (84) has at least one stop cam (127), and preferably two diametrically opposite stop cans (127), each stop cam (127) extending in the axial direction into a circumferential housing cut-out (128) which is limited in the circumferential direction by two stop edges (129) on which the stop cam (127) rests alternately in the first or second switching position.

## Revendications

1. Soupape de commande pour commander en particulier des agents de pression pneumatiques, comprenant un boîtier (4) qui comporte un canal d'entrée (12) pouvant être soumis à une pression de système (P) et au moins un canal de sortie (10, 14), ainsi que deux éléments de soupape (20, 22) en forme de disques, disposés dans une chambre (6) du boîtier, serrés l'un contre l'autre de manière étanche par pression lors de leur fonctionnement et réalisés de préférence en une matière céramique, le premier élément de soupape (20) étant disposé de manière stationnaire dans la chambre (6) et le deuxième élément de soupape (22) étant disposé dans la chambre (6) pour pouvoir pivoter entre au moins deux positions de commande, de manière à relier les canaux d'entrée et de sortie (10, 12, 14) entre eux ou deux par deux ou bien à les séparer les uns des autres, chaque canal d'entrée ou de sortie (10, 12, 14) du boîtier (4) étant prolongé par une ouverture de passage (28, 30, 34) du premier élément de soupape stationnaire (20), et la connexion d'au moins deux des canaux du boîtier (4) étant effectuée au moyen du deuxième élément de soupape (22) couvrant les ouvertures de passage (28, 30, 34) du premier élément de soupape (20) et, en fonction de la position de commande, reliant au moins deux canaux entre eux,
caractérisée en ce que le deuxième élément de soupape (22), qui est mobile, présente au moins une ouverture de passage (42) en forme de segment de cercle telle qu'elle couvre au moins partiellement, dans chaque position de commande, l'ouverture de passage (34) reliée au canal d'entrée (12) du premier élément de soupape (20), ainsi que, dans au moins l'une des positions de commande, également l'une des autres ouvertures de passage (28), de manière à ce que, pour engendrer la pression, le deuxième élément de soupape (22) subisse sur sa face située à l'opposé du premier élément de soupape (20), dans chaque position de commande, la pression de système de l'agent de pression régnant dans le canal d'entrée (12).

2. Soupape de commande selon la revendication 1,
caractérisée en ce que la surface du deuxième élément de soupape (22) qui est située à l'opposé du premier élément de soupape (20) et soumise à la pression est suivie d'une région de la chambre (6) de boîtier qui est reliée par les ouvertures de passage (34, 42) des éléments de soupape (20, 22) au canal (12) d'entrée de la pression.

3. Soupape de commande selon la revendication 1 ou 2,
caractérisée en ce que la chambre (6) est cylindrique et présente un fond (8) disposé perpendiculairement à l'axe longitudinal (7) du boîtier, les canaux (10, 12, 14) débouchant dans la chambre (6) dans la région du fond (8) et étant ensuite prolongés respectivement par les ouvertures de passage (28, 30, 34) du premier élément de soupape stationnaire (20) situé en regard du fond (8), un joint profilé (36), qui sépare hermétiquement les canaux entre eux, étant disposé entre le premier élément de soupape (20) et le fond (8) du boîtier.

4. Soupape de commande selon l'une ou plusieurs des revendications 1 à 3,
caractérisée par un mécanisme de rappel qui retourne le deuxième élément de soupape (22) à partir d'une deuxième position de commande, après une légère rotation manuelle, automatiquement dans une première position de commande.

5. Soupape pour la commande en particulier d'agents de pression pneumatiques, comprenant un boîtier (4, 132, 162) avec au moins un canal d'entrée de pression (12, 144, 164) et au moins un canal de sortie (10, 14, 156), ainsi qu'au moins deux éléments de soupape (20, 22 ; 136, 138 ; 166, 168) en forme de disques, disposés dans une chambre de boîtier (6, 134, 163), serrés l'un contre l'autre de manière étanche par pression lorsqu'ils fonctionnent et réalisés de préférence en une matière céramique, l'un au moins de ces éléments étant monté rotatif dans la chambre du boîtier de manière à ce que les canaux d'entrée, respectivement de sortie puissent être reliés entre eux dans leur totatlité ou deux par deux, au moins l'un des éléments de soupape (20, 22 ; 136, 138 ; 166, 168) subissant l'action de l'agent de pression sur sa face opposée à l'autre élément de soupape (20, 136, 166) pour engendrer la pression,
caractérisée par un mécanisme de rappel qui retourne le deuxième élément de soupape (22) à partir d'une deuxième position de commande, après une légère rotation manuelle, automatiquement dans une première position de commande.

6. Soupape de commande selon la revendication 5,
caractérisé en ce que, dans le boîtier (4, 132, 162), sont disposés deux éléments de soupape (20, 22 ; 136, 138 ; 166, 168), le premier élément de soupape (20, 136, 166) étant monté stationnaire dans la direction axiale et circonférentielle dans la chambre (6, 134, 163), indépendamment du deuxième élément de soupape (22, 138, 168) et le deuxième élément de soupape (22, 138, 168) étant monté rotatif.

7. Soupape de commande selon la revendication 5 ou 6,
caractérisée en ce que la surface du deuxième élément de soupape (22, 138, 168), opposée au premier élément de soupape (20, 136, 166), est suivie d'une région de la chambre de boîtier (6, 134, 163) qui est reliée au canal d'entrée de la pression (12, 144, 164).

8. Soupape de commande selon l'une ou plusieurs des revendications 5 à 7,
caractérisée en ce que la chambre de boîtier (4, 134, 163) est cylindrique avec un fond (8, 140) disposé perpendiculairement à l'axe longitudinal (7) du boîtier, les canaux (10, 12, 14 ; 144, 156, 164 ; A' à H') débouchant dans la chambre de boîtier (6, 134, 163) dans la région du fond (8, 140), et le premier élément de soupape (20, 136, 166), stationnaire et en regard du fond (8, 140), présentant des ouvertures de passage (28, 30, 34 ; 146, 152) reliées aux canaux, et un joint profilé (36) qui sépare hermétiquement les canaux entre eux étant disposé entre le premier élément de soupape (20, 136, 166) et le fond (8, 140) du boîtier.

9. Soupape de commande selon l'une ou plusieurs des revendications 5 à 8,
caractérisée en ce que le deuxième élément de soupape (22) qui est monté rotatif possède au moins une ouverture de passage axiale (42) qui coïncide au moins partiellement dans chaque position de rotation avec l'ouverture de passage (34) du premier élément de soupape (20) reliée au canal de pression (12).

10. Soupape de commande selon l'une ou plusieurs des revendications 1 à 9,
caractérisée en ce que le diamètre du premier élément de soupape (20, 136, 166) est supérieur à celui du deuxième élément de soupape (22, 138, 168) de manière à projeter par rapport à celui-ci dans la direction radiale d'une surface (41), un organe de fermeture (70) qui a la forme d'un cylindre creux et qui entoure le deuxième élément de soupape rotatif (22, 138, 168) étant posé sur la surface de projection (41) et poussant le premier élément de soupape (20, 136, 166) contre le joint profilé (36).

11. Soupape de commande selon la revendication 10,
caractérisée en ce que la périphérie extérieure de l'organe de fermeture (70) est reliée par engagement de matières, et en particulier par soudure à ultrasons, au boîtier (4, 132, 162).

12. Soupape de commande selon la revendication 10 ou 11,
caractérisée en ce qu'un élément d'entraînement axial (50) s'étend à travers l'organe de fermeture (70), cet élément étant solidaire en rotation avec le deuxième élément de soupape (22, 138, 168) et étanché par rapport à l'organe de fermeture (70) à l'aide d'un joint (68).

13. Soupape de commande selon l'une ou plusieurs des revendications 10 à 12,
caractérisée en ce que le premier élément de soupape (136, 166) possède, dans la région de la surface de projection (41) au moins une fente axiale (146) qui recouvre au moins partiellement le canal d'entrée de la pression (144, 164).

14. Soupape de commande selon la revendication 12 ou 13,
caractérisée en ce que l'élément d'entraînement (50) présente une saillie d'arrêt (56) axiale qui s'engage mécaniquement et/ou par force dans une ouverture centrale (46) du deuxième élément de soupape (22, 138, 168).

15. Soupape de commande selon l'une ou plusieurs des revendications 9 à 12 ou 14,
caractérisée en ce que l'élément d'entraînement (50) présente au moins une saillie d'entraînement (54) s'engageant mécaniquement dans les deux directions circonférentielles dans l'ouverture de passage (42) du deuxième élément de soupape (22).

16. Soupape de commande selon l'une ou plusieurs des revendications 12 à 15,
caractérisée en ce qu'un ressort de pression précontraint (62) est disposé entre l'élément d'entraînement (50) et le deuxième élément de soupape (22, 138, 168).

17. Soupape de commande selon l'une ou plusieurs des revendications 12 à 16,
caractérisée en ce que l'élément d'entraînement (50) s'appuie sur l'organe de fermeture (70) dans une direction axiale opposée aux éléments de soupape.

18. Soupape de commande selon l'une ou plusieurs des revendications 12 à 17,
caractérisée en ce qu'une portion d'entraînement (80) de section transversale de préférence carrée, de l'élément d'entraînement (50) s'engage mécaniquement dans un logement (82) d'un bouton rotatif (84).

19. Soupape de commande selon la revendication 18,
caractérisée en ce qu'un prolongement cranté (86) de l'élément d'entraînement (50) s'engage par force et/ou mécaniquement dans une ouverture axiale (87) du bouton rotatif (84).

20. Soupape de commande selon la revendication 19,
caractérisée en ce que le prolongement cranté (86) a la forme d'une broche et présente une fente axiale (92), une cheville de sécurité (94) étant disposée dans l'ouverture axiale (87) du bouton rotatif (84), une portion (96) de cette cheville s'engageant dans la fente (92) de la saillie d'arrêt (86).

21. Soupape de commande selon l'une ou plusieurs des revendications 1 à 20,
caractérisé en ce que le mécanisme de rappel présente une bague de rappel (100) disposée dans le boîtier (4), entre le bouton rotatif (84) et l'organe de fermeture (70), cette bague étant disposée dans le boîtier (4) mobile dans la direction axiale et bloquée en rotation dans la direction circonférentielle, un ressort de pression précontraint (106) étant disposé entre la bague de rappel (100) et l'organe de fermeture (70), et le bouton rotatif (84) présentant des cames (108) qui s'étendent axialement dans la direction de la bague de rappel (100) et sont appliquées sur une surface périphérique (110) de la bague de rappel (100) axialement en regard.

22. Soupape de commande selon la revendication 21,
caractérisée en ce que le bouton rotatif (84) présente deux cames (108) diamétralement en regard et que la surface (110) de la bague de rappel (100) présente deux portions identiques, qui, partant d'un évidement d'arrêt (112) prévu à 0 ° , respectivement à 180° présentent une région (114) s'étendant sur une région angulaire d'environ 30 perpendiculairement à l'axe longitudinal (7) de la soupape, légèrement décalée dans la direction du bouton rotatif (84) par rapport à l'évidement d'arrêt (112), ainsi qu'une surface (116) qui y fait suite, inclinée sur une région angulaire de 60 environ dans une direction opposée au bouton rotatif (84), la surface inclinée (116) aboutissant à l'endroit d'un bord d'arrêt (118) sensiblement parallèle à l'axe longitudinal (7), suivi à son tour d'une région (120) s'étendant sur un angle de 70 environ perpendiculairement à l'axe longitudinal (7) et suivi, à 160°, respectivement à 340 ° , de nouveau par l'évidement d'arrêt (112).

23. Soupape de commande selon l'une ou plusieurs des revendications 18 à 22,
caractérisée en ce que le bouton rotatif (84) présente au moins une, de préférence deux, cames d'arrêt (127) situées diamétralement en regard, chaque came d'arrêt (127) s'étendant dans la direction axiale dans un évidement périphérique (128) du boîtier, limité dans la direction périphérique par deux bords d'arrêt (129) contre lesquels est alternativement appliquée la came d'arrêt (127) dans la première ou la deuxième position de commande.
